(19) Europäisches Patentamt
European Patent Office
Office européen des brevets

(11) Publication number: **0 379 068 A2**

(12) **EUROPEAN PATENT APPLICATION**

(21) Application number: **90100525.6**

(51) Int. Cl.5: **B29C 39/42**

(22) Date of filing: **11.01.90**

(30) Priority: **18.01.89 JP 4346/89 U**
**18.01.89 JP 9176/89**
**18.01.89 JP 9177/89**

(43) Date of publication of application: **25.07.90 Bulletin 90/30**

(84) Designated Contracting States: **AT BE CH DE DK ES FR GB GR IT LI LU NL SE**

(71) Applicant: **MITSUI ENGINEERING & SHIPBUILDING CO., LTD**
**6-4 Tsukiji 5-chome, Chuo-ku**
**Tokyo 104(JP)**

(72) Inventor: **Hirano, Yoshinao**
**4-15, Tatsumidai Higashi**
**Ichihara-shi, Chiba(JP)**
Inventor: **Sato, Katsumi**
**1986-25, Uruido**
**Ichihara-shi, Chiba(JP)**
Inventor: **Nagamori, Shigeru**
**51-1, Soja**
**Ichihara-shi, Chiba(JP)**
Inventor: **Murata, Katushide**
**3-2-2, Wakamiya**
**Ichihara-shi, Chiba(JP)**

(74) Representative: **Patentanwälte Grünecker, Kinkeldey, Stockmair & Partner**
**Maximilianstrasse 58**
**D-8000 München 22(DE)**

(54) **Optical molding method and apparatus.**

(57) An optical molding method using an optical molding apparatus including a container provided with an aperture on a side surface or the bottom surface thereof, a base movable away from the surface of the aperture on the inner wall side of the container, and a light radiation device for radiating a light flux into the container through the aperture. A target object is produced by laminating cured layers on the base each of which corresponds to a section of the target object by radiating the light flux while moving the light flax and gradually moving the base away from the aperture. A resin coating layer is provided on the surface of the aperture on the inner wall side of the container. The light flux is focused on a point except a point in the resin coating layer. Alternatively, the aperture is moved in the direction of the plane of the aperture in the state in which the cured layer is away from the aperture.

An optical molding apparatus including a container for accommodating a photocurable resin provided with an aperture on a side surface or the bottom surface thereof, a base movable away from the surface of the aperture on the inner wall side of the container, and a light radiation device for radiating a light flux into the container through the aperture. A coating film of an ethylene tetrafluoride - propylene hexafluoride copolymer is provided on the surface of the aperture on the inner wall side of the container or a reflectionless coating is applied to at least one surface of the aperture.

FIG. 1 (a)

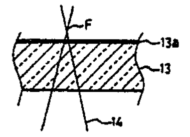


EP 0 379 068 A2

# OPTICAL MOLDING METHOD AND APPARATUS

## FIELD OF THE INVENTION AND RELATED ART STATEMENT

The present invention relates to optical molding method and apparatus for optically molding a cured object having a desired configuration by radiating light on a photocurable resin. More particularly, the present invention relates to a method of optically molding an cured object by radiating a light flux on a photocurable resin in a container while scanning the resin by the light flux through an aperture provided on the container and an apparatus for optically molding a cured object by radiating light on a photocurable resin in a container through an aperture provided on the container.

Optical molding methods for optically producing a target object by repeating the process of radiating a light flux on a photocurable resin so as to cure the irradiated portion and extend the cured portion continuously in the horizontal direction, supplying a photocurable resin on the upper side of the cured portion and radiating a light flux on the resin so as to also extend the cured portion continuously in the vertical direction are known as disclosed in, for example, Japanese Patent Laid-Open Nos. 247515/1985, 35966/1987 and 10140/1987. A method of using a mask in place of the scanning by a light flux is also known.

One of these methods adopts an apparatus including a container having an aperture on the bottom surface or a side surface thereof, a device for radiating a light flux through the aperture, and a base provided in the container in such a manner as to be movable away from the aperture. This optical molding method will be explained with reference to Fig. 2.

In Fig. 2, a photocurable resin 12 is accommodated in a container 11. On the bottom surface of the container 11, an aperture 13 made of a light transmitting plate such as a silica glass plate is provided. An optical system (light radiation device) is provided which is composed of a light emitting portion 15 with a built-in lens for radiating a light flux 14 onto the aperture 13, an optical fiber 16, an X-Y table 17 for moving the light emitting portion 15 in the X-Y direction in the horizontal plane, wherein X and Y are two directions orthogonal to each other, and a light source 20.

A base 21 is disposed in the container 11 so as to be lifted and lowered by an elevator 22. The X-Y table 17 and the elevator 22 are controlled by a computer 23.

When a cured object is produced by the above-described apparatus, the base 21 is first located slightly above the aperture 13 and the light flux 14 scans a horizontal section (the portion corresponding to the bottom surface or the upper surface, in this case) of the target object. The scanning operation is carried out by moving the X-Y table 17 controlled by the computer.

After the entire surface of that horizontal section of the target object has been irradiated with light, the base 21 is slightly lifted and an uncured photocurable resin is poured between the cured object (cured layer) 24 and the base 21, and light is radiated in the same way as above. By repeating this process, the cured object having the intended configuration is obtained as a laminate.

In the apparatus shown in Fig. 2, the scanning operation of the light flux 14 is carried out by moving the X-Y table 17, but it is possible to adopt an optical system instead in which the light emitted from the light source and reflected by a mirror (not shown) is converged by the lens so as to radiate the light onto the photocurable resin. In this case, the scanning operation of the light flux 14 is carried out by rotating the mirror.

Although the cured object 24 is produced by the scanning of the light flux 14 in the apparatus shown in Fig. 2, for example, a mask 26 provided with slits 25 and having a configuration which corresponds to the section of the target object may be used instead, as shown in Fig. 3. In Fig. 3, the reference numeral 27 represents a parallel light flux. The other reference numerals in Fig. 3 represent the corresponding elements to those in Fig. 2.

In the above-described optical molding apparatus, it is necessary to move the cured object 24 away from the aperture 13 when lifting the base 21. This is because if the cured object 24 is separated from the base 21, it is impossible to continue the molding process.

For this purpose, a resin coat layer 13a of, e.g., a fluorine plastic is formed on the surface of the aperture 13 on the inner wall side of the of container in the prior art. The resin coat layer has a low adhesion with the cured object 24, which is a cured photocurable resin, so that when the base 21 is lifted, the cured object 24 is easily separated from the aperture 13 and is constantly kept in the state of being adhered to the base 21.

As a fluorine plastic for the resin coating layer 13a, polyethylene tetrafluoride (hereinunder referred to

as "PTFE") is conventionally chiefly used.

When the light flux 14 is radiated from the light emitting portion 15 in the above-described way, the light flux 14 is conventionally focused by the lens (not shown) of the light emitting portion 15 so that the focal point F is in the resin coating layer 13a.

When the focal point F of the light flux 14 agrees with the resin coating layer 13a in this way, if the resin coating layer 13a is exposed to the light flux 14 for a long time, the resin coating layer 13a is deteriorated or minute protrusions are produced on the surface of the resin coating layer 13a, so that the adhesion between the cured object 24 and the resin coating layer 13a increases, thereby involving a fear of the cured object 24 being separated from the base 21 at the time of lifting the base 21. Such deterioration of the resin coating layer 13a is apt to be caused in the case of locally radiating the light flux 14 at the same portion for a long time in succession such as the case of growing a long cylindrical member in the longitudinal direction of the cylinder by laminating discal cured objects.

The resin coating layer 13a formed on the surface of the aperture 13 on the inner wall side of the container 11 is required to have the following characteristics:

(1) The adhesion with the cured object 24 is small.

Since it is necessary that the resin coating layer 13a is easily separated from the cured object 24 when the base 21 is lifted, it is necessary that the adhesion $F_1$ between the resin coating layer 13a and the aperture 13, the adhesion $F_2$ between the resin coating layer 13a and the cured object 24 and the adhesion $F_3$ between the cured object 24 and the base 21 have the following relationship:

$F_3 > F_2$

$F_1 > F_2$

In ordinary case, $F_3$ is 10 to 50 kg/cm$^2$ , and when the resin coating layer 13a is a PTFE coating film, $F_2$ is about 0.5 ~ 1.5 kg/cm$^2$.

(2) The resin coating layer 13a is transparent.

Since it is necessary to transmit light such as ultraviolet light through the resin coating layer 13a, the resin coating layer 13a must have a light transmission property with respect to ultraviolet light (ultraviolet light used has a wavelength of 325 nm).

(3) The resin coating layer 13a has light resistance and durability.

When the resin coating layer 13a is exposed to the light flux 14 for a long time, the resin coating layer 13a is deteriorated or minute protrusions are produced on the surface of the resin coating layer 13a, so that the adhesion between the cured object 24 and the resin coating layer 13a increases, thereby involving a fear of the cured object 24 being separated from the base 21 at the time of lifting the base 21, as described above. For this reason, the resin coating layer 13a is required to be stable with respect to light and excellent in durability.

(4) The resin coating layer 13a is stable with respect to the photocurable resin 12.

Since the resin coating layer 13a is constantly in contact with the photocurable resin 12, it is naturally necessary that the resin coating layer 13a is stable with respect to the photocurable resin 12.

No resin coating layer conventionally provided, however, fully satisfies all of the conditions 1 to 4, and the improvement has been demanded.

For example, PTFE, which is conventionally frequently adopted, has excellent light resistance and a small adhesion with the cured object, but it is inferior in transparency and has a low ultraviolet light transmittance. On the other hand, another fluorine plastic, ethylene tetrafluoride -perfluoroalkylvinyl ether copolymer (hereinunder referred to as "PFA") has a light transmission property but the adhesion with the cured object is large.

In addition, in a conventional optical molding apparatus, a considerable ratio of light radiated onto the photocurable resin in the container from the light radiation device is reflected on the surface of the aperture

and is disadvantageously lost.

## OBJECT AND SUMMARY OF THE INVENTION

Accordingly, it is an object of the present invention to eliminate the above-described problems in the prior art and to provide an optical molding method which is capable of preventing the deterioration of the resin coating layer of the aperture and enhancing the durability of an optical molding apparatus.

It is another object of the present invention to provide an optical molding method which is capable of enhancing the releasability of the cured object from the resin coating layer and enabling smooth molding operation.

It is still another object of the present invention to provide an optical molding apparatus provided with a resin coating layer on the aperture which is excellent in light transmittance, light resistance and durability, and which has a small adhesion with the cured object.

It is a further object of the present invention to provide an optical molding apparatus which is capable of preventing the reflection of light on the surface of the aperture, thereby reducing the reflection loss of the radiated light and hence reducing the cost of electric power, increasing the curing speed and hence shortening the molding time.

To achieve this aim, in a first aspect of the present invention, there is provided an optical molding method comprising the step of laminating a multiplicity of cured layers of a photocurable resin each of which corresponds to a section of a target object by radiating a light flux from an aperture provided with a resin coating layer in a container such that the focal point of the light flux is a point except a point in the resin coating layer and gradually moving a base away from the aperture.

According to this method, the concentration of the radiation of the light flux on the resin coating layer of the aperture is avoided. As a result, the local deterioration of the resin coating layer is prevented.

In a second aspect of the present invention, there is provided an optical molding method comprising the step of laminating a multiplicity of cured layers of a photocurable resin each of which corresponds to a section of a target object by radiating a light flux from an aperture provided with a resin coating layer in a container and gradually moving a base away from the aperture and moving the aperture in the direction of the plane of the aperture in the state in which a cured object is away from the aperture.

According to this method, the concentration of the successive radiation of the light flux on the same place of the aperture is avoided. As a result, the deterioration of the resin coating layer is prevented.

In a third aspect of the present invention, there is provided an optical molding apparatus for producing an object by radiating light onto a photocurable resin in a container from an aperture so as to form a cured object on the surface of a base in the container or a cured object thereon, characterized in that an ethylene tetrafluoride - propylene hexafluoride copolymer (hereinunder referred to as "FEP") coating film is formed on the surface of the aperture on the inner wall side of the container.

According to this apparatus, due to the excellent property of FEP, the resin coating film formed on the surface of the aperture has an excellent property.

In a fourth aspect of the present invention, there is provided an optical molding apparatus for producing an object by radiating light onto a photocurable resin in a container from an aperture so as to form a cured object on the surface of a base in the container or a cured object thereon, characterized in that a reflectionless coating is applied to at least one surface of the aperture.

According to this apparatus, the reflection of light on the surface of the aperture is reduced and the loss of the light energy is therefore reduced.

The above and other objects, features and advantages of the present invention will become clear from the following description of the preferred embodiments thereof, taken in conjunction with the accompanying drawings.

## BRIEF DESCRIPTION OF THE DRAWINGS

Figs. 1(a) and 1(b) are explanatory enlarged sectional views of a first embodiment of an optical molding method according to the present invention;

Figs. 2 and 3 show the structures of the apparatuses for executing the first embodiment of the present invention;

Fig. 4 is a sectional view of the aperture of a conventional apparatus; and

Fig. 5 shows the structure of the apparatuses for executing a second embodiment of an optical

molding method according to the present invention.

## DESCRIPTION OF THE PREFERRED EMBODIMENTS

Embodiments of the present invention will be explained with reference to the accompanying drawings.

Figs. 1a and 1b are enlarged sectional views of the aperture in the apparatus for executing an optical molding method of a first embodiment of the present invention.

In Fig. 1(a), the light flux 14 is focused on a point F in the container 11, while in Fig. 1(b), the light flux 14 is focused on a point F in the aperture 13.

By deviating the focal point F of the light flux 14 from the resin coating layer 13a in this way, the concentration of the radiation of the energy of light flux 14 on the resin coating layer 13a is avoided. As a result, the early deterioration of the resin coating layer is prevented.

In the present invention, the focal point F is preferably not less than 0.5 mm, more preferably not less than 1 mm apart from the resin coating layer 13a. However, if the focal point F is excessively apart from the resin coating layer 13a, there is a fear of the side end surface of the cured object obtained being deficient in the sharpness, thereby producing an object losing its trim shape. Although the distance between the focal point F and the resin coating layer 13a is slightly different depending on the focal length of the lens provided in the light emitting portion 15, the focal point F is preferably within a distance of 3 mm, more preferably 2 mm from the resin coating layer 13a.

In Fig. 2, the aperture 13 is provided on the bottom surface of the container 11 and light is radiated from below the container 11. Alternatively, the aperture 13 may be provided on a side surface of the container 11 and light is radiated from the side surface of the container 11. In this case, the base 21 is gradually moved sideways in the production process.

In this embodiment, the scanning operation of the light flux 14 is carried out by moving the X-Y table 17 but it is possible to adopt an optical system instead in which the light emitted from the light source and reflected by a mirror (not shown) is thereafter converged by the lens so as to radiate the light onto the photocurable resin. In this case, the scanning operation of the light flux 14 is carried out by rotating the mirror.

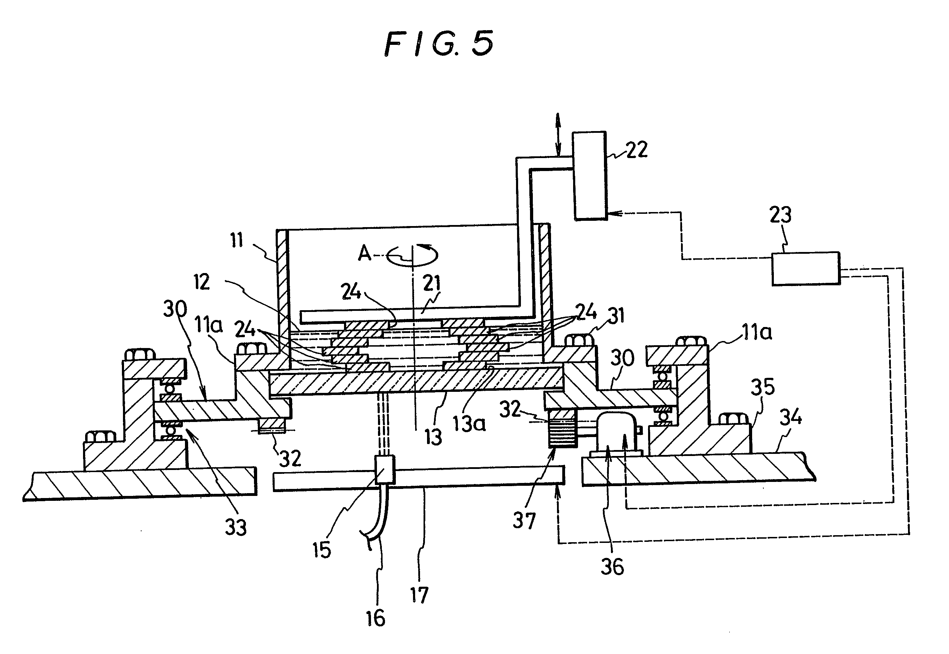

An optical molding method of a second embodiment of the present invention will be explained with reference to Fig. 5.

Fig. 5 is a vertical sectional view of an optical molding apparatus which is suitable for executing the second embodiment of the present invention.

In this embodiment, the container 11 is in the shape of a circle in plan view.

The aperture 13 is attached to the bottom surface of the container 11 by a ring frame 30. The frame 30 is secured to the flange portion 11a of the container 11 by bolts 31, and the outer periphery of the aperture 13 is clamped between the inner peripheral portion of the frame 30 and the flange portion 11a of the container 11. An annular rack 32 is secured to the bottom surface of the frame 30. The frame 30 is rotatably supported by a support block 35 on a machine base 34 through a vertical pair of thrust bearings, and the container 11 is rotatable around the axis A in the horizontal plane.

A motor 36 is placed on the machine base 34, and a pinion 37 is secured to the rotary shaft of the motor 36. The pinion 37 is intermeshed with the rack 32.

The X-Y table 17 is provided in such a manner as to face the bottom surface of the aperture 13. The X-Y table 17 freely moves the light emitting portion 15 in the horizontal plane. Light such as a laser beam is supplied from the light source 20 (not shown in Fig. 5) to the light emitting portion 15 through the optical fiber 16. The base 21 is disposed in the container 11 in such a manner as to be allowed to be vertically moved by the elevator 22. The light source 20, the elevator 22, the motor 36 and the X-Y table 17 are controlled by the computer 23.

The upper surface of the aperture 13 is provided with the resin coating layer 13a of a fluorine plastic.

When the second embodiment is executed by using the apparatus shown in Fig. 5, the base 21 is first moved away from the aperture 13 by a predetermined distance (for example, about 0.1 to 1 mm), and light is then radiated so as to form a first cured layer 24. After the base 21 is further moved away from the aperture 13 by a predetermined distance by the elevator 22, the motor 36 is driven to rotate the container 11 around the axis A by a predetermined angle. Thereafter, light is radiated again to form a second cured layer 24. After the base 21 is moved away from the aperture 13 by a predetermined distance, the container 11 is rotated and a third cured layer 24 is formed. This process is successively repeated.

After all the layers of the intended configuration have been formed, the laminate of the cured layers 24 is removed from the base 21 and subjected to finishing, if necessary, thereby producing the target object.

According to the optical molding method, the local concentration of light radiation on the resin coating

layer 13a of the aperture 13 is avoided. More specifically, since the container 11 is rotated after the formation of the n-th (n is a natural number) cured layer 24 and before the formation of the (n + 1)th layer 25, even if the n-th layer and the (n + 1)th layer have the same configuration and are formed at the same position with respect to the base 21, the light emitted from the light emitting portion 15 passes different portions of the aperture 13 for the n-th layer and for the (n + 1)th layer. However, when the n-th layer and the (n + 1)th layer are circular layers which are concentric with respect to the axis A and have the same diameter, the light passes the same portion of the aperture 13. In this case, the X-Y table 17 is disposed such that the center thereof is eccentric with the axis of the container 11.

In this way, the local concentration of light radiation on the resin coating layer 13a of the aperture 13 is avoided.

Although the container 11 is a circular tank in this embodiment, it may be a polygonal tank such as triangle, rectangular, pentagonal and hexagonal tanks. In addition, although the container is rotated between the formation of the n-th layer and the formation of the (n + 1)th layer in this embodiment, it is possible not to rotate the container 11 during the formation of a plurality of cured layers and to rotate the container 11 after the formation of the plurality of cured layers.

It is also possible to make the body portion of the container 11 and the aperture 13 relatively movable, and to stop the body portion of the container 11 while moving the aperture 13 solely.

The aperture 13 may be moved in the two-dimensional direction in the plane of the aperture in place of being rotated in the plane of the aperture.

The aperture 13 may be manually moved by an operator or the like in place of a motor.

The aperture 13 is provided on the bottom surface of the container 11 and light is radiated from below the container 11 in this embodiment, but the aperture 13 may be provided on a side surface of the container 11 and light is radiated from the side surface of the container 11. In this case, the base 21 is gradually moved sideways in the molding process.

In this embodiment, the scanning operation of the light flux 14 is carried out by moving the X-Y table 17, but it is possible to adopt an optical system instead in which the light emitted from the light source and reflected by a mirror (not shown) is converged by the lens so as to radiate the light onto the photocurable resin. In this case, the scanning operation of the light flux 14 is carried out by rotating the mirror.

Although the cured object 24 is produced by the scanning of the light flux 14 in this embodiment, for example, a mask 16 provided with slits 25 and having a configuration which corresponds to the section of the target object may be used instead, as shown in Fig. 3. The aperture 13 is also moved in the plane of the aperture, if necessary.

According to the first and second embodiments of an optically molding method, the deterioration of the resin coating layer of the aperture is prevented and the durability of the optical molding apparatus is enhanced. In addition, since the releasability of the cured object from the resin coating layer is improved, a smooth optical molding operation is enabled.

An optical molding apparatus of a third embodiment of the present invention is the same as the optical molding apparatuses shown in Figs. 2 and 3 except an FEP coating film is formed as the resin coating layer 13a.

FEP, which has the following excellent properties, is optimum among various fluorine plastics as the resin for the coating film of an optical molding apparatus.

(a) FEP has a no less transparency than PFA and has a light transmitting property with respect to ultraviolet light.

(b) FEP has a small adhesion with a cured object.

(c) FEP has excellent light resistance and durability.

(d) FEP is stable with respect to a photocurable resin.

These excellent properties of FEP will be derived from the molecular structure thereof. It will be explained from the dissociation energy for bonding as follows:

PTFE, PFA and FEP have the following structural formulas, respectively.

**PTFE**

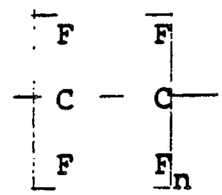

**PFA**

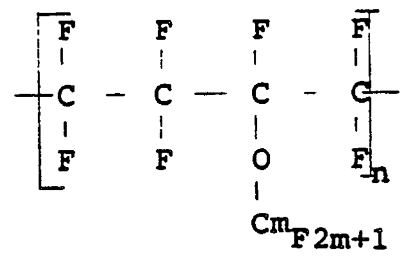

**FEP**

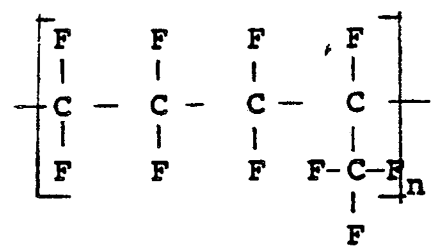

The dissociation energies (Kcal/mol (25° C)) of chief interatomic bonds are as follows:

C - C: 84

C - F: 129

C - 0: 76

The light resistance and the durability are greatly influenced by the dissociation energy for bonding for constituting a molecule, and the larger dissociation energy a molecule has, the more excellent light resistance and durability it has. The adhesion of a molecule is the smaller, as the dissociation energy thereof is the larger.

For this reason, it is considered that FEP, which is composed of C - F bondings and C - C bondings having a large dissociation energy, is provided with light resistance, durability and adhesion equal to those of PTFE, which is also composed of C - F bondings and C - C bondings. In contrast, PFE, which includes a C - O bonding having a small dissociation energy, is inferior in light resistance and durability, and has a large adhesion.

In the third embodiment, if the thickness of the FEP resin coating film is too large, it is impossible to obtain a sufficient light transmittance, while if it is too small, the light resistance and the durability are insufficient and the adhesion improving effect of the resin coating is also insufficient. The preferable thickness of the FEP resin coating film is therefore about 5 to 100 µm.

In the optical molding apparatus of the third embodiment, the resin coating film of the aperture has excellent light transmittance, light resistance and durability and a small adhesion with a cured object. It is therefore possible to pass light therethrough at a high transmittance, thereby enabling efficient molding operation. The deterioration of the coating film is prevented and an optical molding apparatus efficient in durability is obtained. In addition, since the releasability of the cured object from the coating film is good, smooth optical molding operation is effected.

An optical molding apparatus of a fourth embodiment of the present invention is the same as the apparatuses shown in Figs. 2 and 3 except that a reflectionless coating is applied to one surface, preferably both surfaces of the aperture.

In the apparatus of the fourth embodiment, the target object having the intended configuration is obtained as a laminate. Since both surfaces of the aperture 13 is subjected to reflectionless coating in the molding process, the amount of light flux 14 reflected on the surface of the aperture 13 is very small, and

light energy loss is scarcely produced. A reflectionless coating applied merely to one surface of the aperture 13 also has the light reflection preventive effect in its own way.

As the reflectionless coating, various coatings such as a magnesium fluoride coating may be adopted.

The aperture 13 is provided on the bottom surface of the container 11 and light is radiated from below the container 11 in the apparatus shown in Fig. 2, but the aperture 13 may be provided on a side surface of the container 11 and light is radiated from the side surface of the container 11. In this case, the base 21 is gradually moved sideways in the molding process.

In the optical molding apparatus of the fourth embodiment, since the reflection of light on the surface of the aperture 13 is prevented, the reflection loss of the light radiated onto the photocurable resin is very small. The cost of the electric power is therefore reduced and the curing speed is increased and hence the molding time is shortened without increasing the power of the light source.

In the present invention, the aperture 13 is preferably made of a material having a light transmitting property with respect to the light flux 14 and necessary strength and corrosion resistance. If the light flux 14 is ultraviolet light, a silica glass plate is optimum. As the resin coating layer 13a in the first, second and third embodiments, a fluorine plastic is preferably used, more preferably an ethylene tetrafluoride - propylene hexafluoride copolymer is used in the same way as in the third embodiment. An ethylene tetrafluoride - propylene hexafluoride copolymer has a high transmittance with respect to ultraviolet light and is slow to be deteriorated by ultraviolet light. In addition, the adhesion of the photocurable resin with the cured object is small.

In the present invention, various resins which are cured by light irradiation are usable. For example, modified polyurethane methacrylate, origo-ester acrylate, urethane acrylate, epoxy acrylate, photosensitive polyimide and aminoalkyd will be cited.

As the light, various kinds of lights such as visible light and ultraviolet light may be used in accordance with the photocurable resin used. The light may be used in the form of ordinary light, but if it is used as a laser beam, it is possible to enhance the energy level, shorten the molding time and enhance the molding accuracy by utilizing the good condensing property.

The third embodiment will be explained more concretely with reference to the following example.

## Example 1

The mechanical properties, the optical properties and the physical properties of PTFE, PFA and FEP coating films (thickness: 30 µm) were examined. The results are shown in Table 1.

Table 1

| Fluorine plastic | | PTFE | PFA | FEP |
|---|---|---|---|---|
| Mechanical strength | Tensile strength ($kgf/cm^2$) | 140 to 350 | 280 to 320 | 190 to 320 |
| | Compression strength ($kgf/cm^2$) | 120 | 160 to 170 | 150 |
| | Elongation (%) | 200 to 400 | 280 to 300 | 250 to 330 |
| Optical property | Light transmittance | Opaque | Translucent | Translucent |
| Physical properties | Contact angle (with respect to water) (degree) | 114 | 118 to 122 | 115 |
| | Adhesion * ($kg/cm^2$) | 1.5 | 2 | 1.4 |

* Adhesion testing condition: output of laser: 5 mW, thickness of cured object: 0.1 mm

It is clear from Table 1 that the FEP coating resin film of the third embodiment has a high mechanical strength. excellent light transmittance, and a small adhesion, so that it is optimum as the coating film of the aperture.

While there has been described what are at present considered to be preferred embodiments of the invention, it will be understood that various modifications may be made thereto, and it is intended that the appended claims cover all such modifications as fall within the true spirit and scope of the invention.

**Claims**

1. An optical molding method using an optical molding apparatus including a container provided with an aperture on a side surface or the bottom surface thereof and a resin coating layer on the surface of said aperture on the inner wall side of the container, a base movable away from the surface of said aperture on the inner wall side of said container, and a light radiation device for radiating a light flux into said container through said aperture, said method comprising the steps of:
forming a cured object on or beneath said base by radiating said light flux onto a photocurable resin accommodated in said container while moving said light flux in such a manner as to draw a section of a target object the container or a + cured object thereon and curing the irradiated portion; and
repeating the process of moving said base at a predetermined pitch, coating said cured object with a photocurable resin and radiating said light flux so as to laminate the cured objects;
wherein said light flux is focused by a lens on a point except a point in said resin coating layer.

2. A method according to Claim 1, wherein the focal point of said light flux is 0.5 to 3 mm apart from said resin coating layer.

3. A method according to Claim 1, wherein the focal point of said light flux is 1 to 2 mm apart from said resin coating layer.

4. A method according to Claim 1, wherein the material for said aperture is silica glass.

5. A method according to Claim 1, wherein the resin for said resin coating layer is a fluorine plastic.

6. A method according to Claim 5, wherein said fluorine resin is an ethylene tetrafluoride - propylene hexafluoride copolymer.

7. An optical molding method using an optical molding apparatus including a container provided with an aperture on a side surface or the bottom surface thereof and a resin coating layer on the surface of said aperture on the inner wall side of said container, a base movable away from the surface of said aperture on the inner wall side of said container, and a light radiation device for radiating a light flux into said container through said aperture, said method comprising the steps of:
forming a cured object on or beneath said base by radiating said light flux onto a photocurable resin accommodated in said container while moving said light flux in such a manner as to draw the section of a target object the container or a + cured object thereon and curing the irradiated portion; and
repeating the process of moving said base at a predetermined pitch, coating said cured object with a photocurable resin and radiating said light flux so as to laminate the cured objects;
wherein said aperture is moved in the direction of the plane of said aperture in the state in which said cured layer is away from said aperture.
light flux is focused by a lens on a point except a point in said resin coating layer.

8. A method according to Claim 7, wherein said aperture is moved by rotating said aperture in the plane of said aperture.

9. A method according to Claim 7, wherein said aperture is moved by moving said aperture in the two-dimensional direction in the plane of said aperture.

10. A method according to Claim 7, wherein the resin for said resin coating layer is a fluorine plastic.

11. A method according to Claim 10, wherein said fluorine resin is an ethylene tetrafluoride - propylene hexafluoride copolymer.

12. An optical molding apparatus used for an optical molding method including the steps of radiating light onto a photocurable resin so as to cure the irradiated portion and laminating the cured objects, said apparatus comprising:
a container for accommodating said photocurable resin provided with an aperture on the bottom surface or a side surface thereof;
a light radiation device for radiating light into said container through said aperture;
a base disposed in said container so as to be movable away from said aperture; and
a coating film of an ethylene tetrafluoride - propylene hexafluoride copolymer formed on the surface of said aperture on the inner wall side of said container.

13. An apparatus according to Claim 12, wherein the thickness of said coating film is 5 to 100 μm.

14. An optical molding apparatus used for an optical molding method including the steps of radiating light onto a photocurable resin so as to cure the irradiated portion and laminating the cured objects, said apparatus comprising:

a container for accommodating said photocurable resin provided with an aperture on the bottom surface or a side surface thereof;

a light radiation device for radiating light into said container through said aperture;

a base disposed in said container so as to be movable away from said aperture; and

a reflectionless coating applied to at least one surface of said aperture.

15. An apparatus according to Claim 14, wherein said reflectionless coating is a magnesium fluoride coating.

FIG. 1 (a)

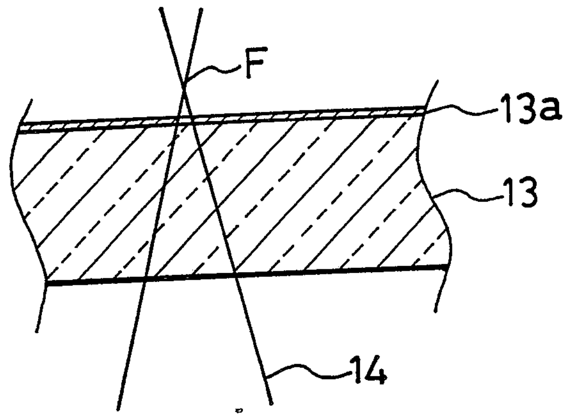


FIG. 1(b)

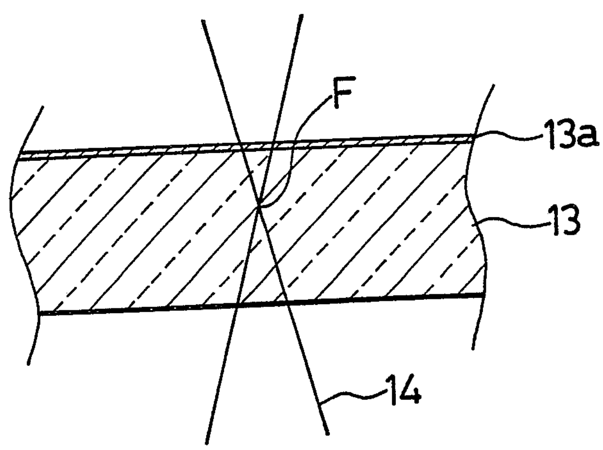

FIG. 2

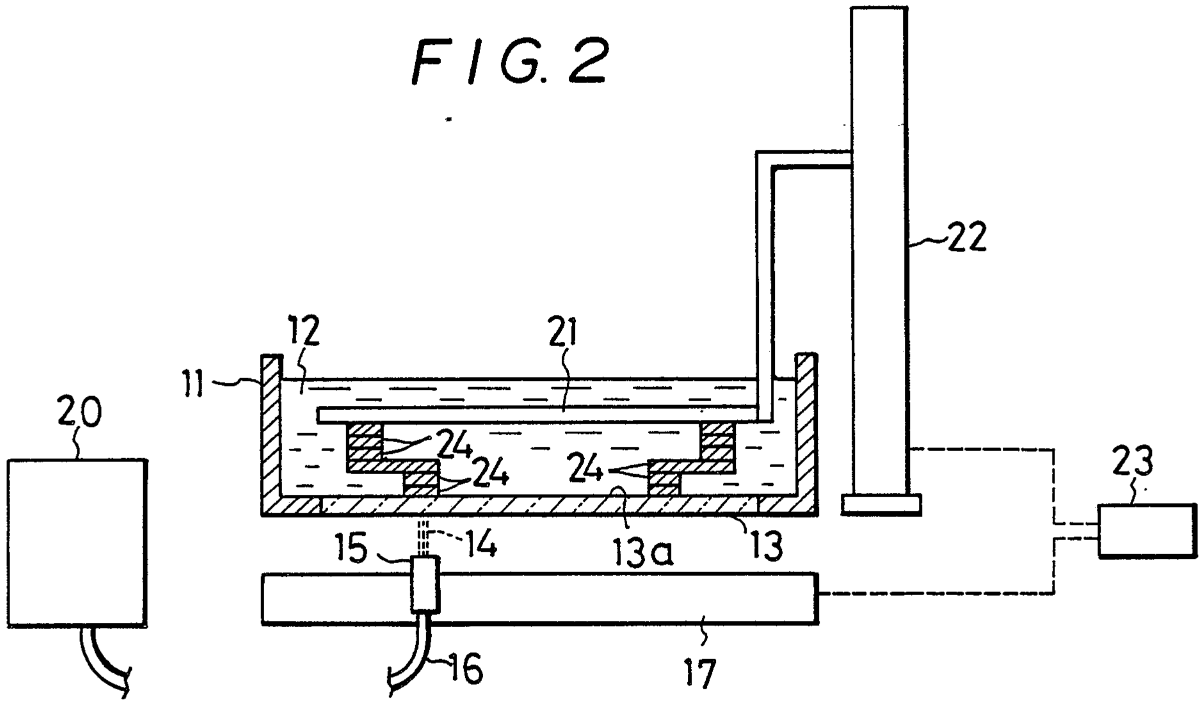


FIG. 4

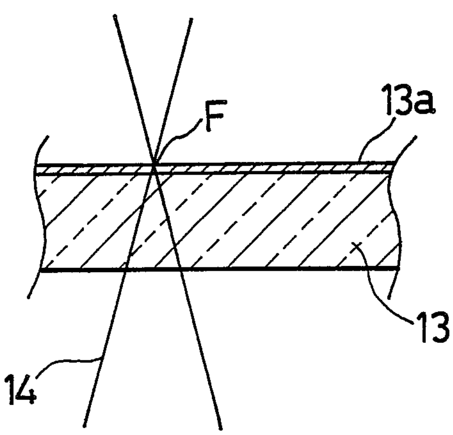


FIG. 3

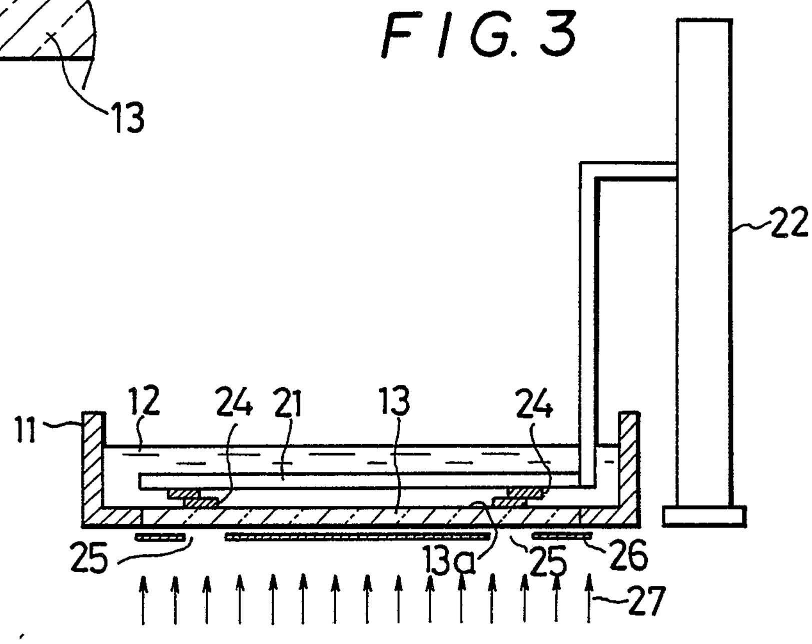

FIG. 5